(19) Europäisches Patentamt
European Patent Office
Office européen des brevets

(11) **EP 3 057 257 A1**

(12) **EUROPEAN PATENT APPLICATION**
published in accordance with Art. 153(4) EPC

(43) Date of publication:
**17.08.2016 Bulletin 2016/33**

(21) Application number: **14876823.7**

(22) Date of filing: **06.01.2014**

(51) Int Cl.:
*H04L 1/00* (2006.01)          *H04L 1/06* (2006.01)
*H04W 72/12* (2009.01)          *H04B 7/06* (2006.01)

(86) International application number:
**PCT/CN2014/070163**

(87) International publication number:
**WO 2015/100747 (09.07.2015 Gazette 2015/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Huawei Technologies Co., Ltd.
Longgang District
Shenzhen, Guangdong 518129 (CN)**

(72) Inventor: **TIAN, Chunchang
Shenzhen
Guangdong 518129 (CN)**

(74) Representative: **Thun, Clemens
Mitscherlich PartmbB
Patent- und Rechtsanwälte
Sonnenstraße 33
80331 München (DE)**

(54) **INFORMATION FEEDBACK METHOD AND NETWORK NODE**

(57) The present invention relates to the field of communications technologies, and in particular, to an information feedback method and a network node, which are used for resolving a technical problem in the prior art that a base station cannot acquire a separate signal. Two information feedback modes are set in embodiments of the present invention. When it is determined that a current information feedback mode is a separate feedback mode, a first type of network node may determine that a feedback object is a valid signal and/or a noise signal, so that a measurement result of the valid signal and/or a measurement result of the noise signal may be separately fed back, thereby resolving the problem that exists in the prior art.

A first type of network node acquires an information feedback mode from a second type of network node, where the information feedback mode includes: a separate feedback mode and a non-separate feedback mode — 101

The first type of network node determines a feedback object if the information feedback mode is the separate feedback mode, where the feedback object includes a valid signal and/or a noise signal — 102

The first type of network node measures the determined feedback object to acquire a measurement result — 103

The first type of network node feeds back information about the measurement result to the second type of network node according to the information feedback mode — 104

FIG. 1

EP 3 057 257 A1

Description

TECHNICAL FIELD

The present invention relates to the field of communications technologies, and in particular, to an information feedback method and a network node.

BACKGROUND

In a Long Term Evolution (Long Term Evolution, LTE) system, measurement and feedback of a channel quality indicator (Channel Quality Indicator, CQI) are supported.

In the prior art, when user equipment feeds back channel state information to a base station, directly feeding back a CQI to the base station is included, that is, CQI=S/(N+1), where S indicates a valid signal, N indicates noise, and I indicates interference. To support a multiple transmission points selection technology, channel state information-interference measurement (Channel State Information-Interference Measurement, CSI-IM) is introduced to the LTE system to perform interference measurement.

For example, the user equipment performs signal measurement by using a non-zero power channel state information-reference signal (Channel State Information-Reference Signal, CSI-RS), and performs interference measurement by using the CSI-IM, so as to acquire a CQI, and feeds back the obtained CQI to the base station.

In a wireless mesh network (mesh network), there are a large quantity of nodes. A control node needs to calculate CQIs of various nodes in the network in different combined conditions of sending/receiving states. By using the prior art, the control node can acquire only a CQI in a combined condition of a signal and interference, and cannot separately acquire a valid signal or a noise signal. When the control node needs to re-determine the CQI, the control node can only re-acquire the CQI, which requires a relatively long time and affects system efficiency.

SUMMARY

Embodiments of the present invention provide an information feedback method and a network node, so that a control node can acquire a separate valid signal and/or noise.

According to a first aspect of the present invention, an information feedback method is provided, including:

acquiring, by a first type of network node, an information feedback mode from a second type of network node, where the information feedback mode includes: a separate feedback mode and a non-separate feedback mode;

determining, by the first type of network node, a feedback object if the information feedback mode is the separate feedback mode, where the feedback object includes a valid signal and/or a noise signal;

measuring, by the first type of network node, the feedback object, to acquire a measurement result; and

feeding back, by the first type of network node, information about the measurement result to the second type of network node according to the information feedback mode.

With reference to the first aspect, in a first possible implementation manner, the acquiring, by a first type of network node, an information feedback mode from a second type of network node includes: receiving, by the first type of network node, first notification signaling sent by the second type of network node, where the first notification signaling carries indication information of the information feedback mode.

With reference to the first aspect or the first possible implementation manner, in a second possible implementation manner, the determining, by the first type of network node, a feedback object includes:

determining, by the first type of network node, the feedback object according to measurement reference signal resource configuration information; and determining that the feedback object is the valid signal if the measurement reference signal resource configuration information includes a channel state information-reference signal CSI-RS; or determining that the feedback object is the noise signal if the measurement reference signal resource configuration information includes channel state information-interference measurement CSI-IM; or determining that the feedback object is the valid signal and the noise signal if the measurement reference signal resource configuration information includes a CSI-RS and CSI-IM.

With reference to the first aspect or the first possible implementation manner, in a third possible implementation manner, the determining, by the first type of network node, a feedback object includes:

receiving, by the first type of network node, selection indication information sent by the second type of network node; and

determining, by the first type of network node, the feedback object according to the selection indication information.

With reference to the first aspect or the first possible implementation manner, in a fourth possible implementation manner, the determining, by the first type of network node, a feedback object includes:

determining, by the first type of network node, the feedback object according to the measurement reference signal resource configuration information if multi-layer data transmission is supported; and

determining that the feedback object is the valid signal and inter-layer interference if the measurement reference signal resource configuration information includes a CSI-RS; or

determining that the feedback object is interference from another node if the measurement reference signal resource configuration information includes CSI-IM; or

determining that the feedback object is the valid signal, inter-layer interference, and interference from another node if the measurement reference signal resource configuration information includes a CSI-RS and CSI-IM.

With reference to the first aspect or any one of the first to the fourth possible implementation manners, in a fifth possible implementation manner, the feeding back, by the first type of network node, information about the measurement result to the second type of network node includes:

quantizing, by the first type of network node, the measurement result; and

feeding back, by the first type of network node, information about a quantized measurement result to the second type of network node according to the information feedback mode.

With reference to the fifth possible implementation manner, in a sixth possible implementation manner, the quantizing, by the first type of network node, the measurement result includes:

obtaining, by the first type of network node, a quantized valid signal according to a local first preset adjustment value and the valid signal when the feedback object includes the valid signal; and

obtaining, by the first type of network node, a quantized noise signal according to a local second preset adjustment value and the noise signal when the feedback object includes the noise signal.

With reference to the fifth possible implementation manner, in a seventh possible implementation manner, the quantizing, by the first type of network node, the measurement result includes:

obtaining, by the first type of network node, a quantized valid signal according to a quantized reference level from the second type of network node and the valid signal when the feedback object includes the valid signal; and

obtaining, by the first type of network node, a quantized noise signal according to the quantized reference level from the second type of network node and the noise signal when the feedback object includes the noise signal.

According to a second aspect of the present invention, a network node is provided, including:

an acquiring unit, configured to acquire an information feedback mode from a second type of network node, where the information feedback mode includes: a separate feedback mode and a non-separate feedback mode;

a determining unit, configured to determine a feedback object if the information feedback mode acquired by the acquiring unit is the separate feedback mode, where the feedback object includes a valid signal and/or a noise signal;

a measurement unit, configured to measure the feedback object acquired by the determining unit, so as to acquire a measurement result; and

a feedback unit, configured to feed back, according to the information feedback mode acquired by the acquiring unit, information about the measurement result acquired by the measurement unit to the second type of network node.

With reference to the second aspect, in a first possible implementation manner, the acquiring unit is specifically configured to receive first notification signaling sent by the second type of network node, where the first notification signaling carries indication information of the information feedback mode.

With reference to the second aspect or the first possible implementation manner, in a second possible implementation manner, the determining unit is specifically configured to: determine the feedback object according to measurement reference signal resource configuration information; and determine that the feedback object is the valid signal if the measurement reference signal resource configuration information includes a channel state information-reference signal CSI-RS; or determine that the feedback object is the noise signal if the measurement reference signal resource configuration information includes channel state information-interference measurement CSI-IM; or determine that the feedback object is the valid signal and the noise signal if the measurement reference signal resource configuration information includes a CSI-RS and CSI-IM.

With reference to the second aspect or the first possible implementation manner, in a third possible implementation manner, the determining unit is specifically configured to determine the feedback object according to selection indication information that is sent by the second type of network node and received by the acquiring unit.

With reference to the second aspect or the first possible implementation manner, in a fourth possible implementation manner, the determining unit is specifically configured to: determine the feedback object according to the measurement reference signal resource configuration information if multi-layer data transmission is supported; and determine that the feedback object is the valid signal and inter-layer interference if the measurement reference signal resource configuration information includes a CSI-RS; or determine that the feedback object is interference from another node if the measurement reference signal resource configuration information includes CSI-IM; or determine that the feedback object is the valid signal, inter-layer interference, and interference from another node if the measurement reference signal resource configuration information includes a CSI-RS and CSI-IM.

With reference to the second aspect or any one of the first to the fourth possible implementation manners, in a fifth possible implementation manner, the feedback unit is specifically configured to: quantize the measurement result; and feed back information about a quantized measurement result to the second type of network node according to the information feedback mode.

With reference to the fifth possible implementation manner, in a sixth possible implementation manner, that the feedback unit is specifically configured to quantize the measurement result is specifically: obtaining a quantized valid signal according to a local first preset adjustment value and the valid signal when the feedback object includes the valid signal; and obtaining a quantized noise signal according to a local second preset adjustment value and the noise signal when the feedback object includes the noise signal.

With reference to the fifth possible implementation manner, in a seventh possible implementation manner, that the feedback unit is specifically configured to quantize the measurement result is specifically: obtaining a quantized valid signal according to a quantized reference level from the second type of network node and the valid signal when the feedback object includes the valid signal; and obtaining a quantized noise signal according to the quantized reference level from the second type of network node and the noise signal when the feedback object includes the noise signal.

According to a third aspect of the present invention, a network node is provided, including:

a memory, configured to store an instruction;
an interface, configured to acquire an information feedback mode from a second type of network node, where the information feedback mode includes: a separate feedback mode and a non-separate feedback mode; and
a processor, configured to: determine a feedback object if the information feedback mode is the separate feedback mode, where the feedback object includes a valid signal and/or a noise signal; measure the feedback object to acquire a measurement result; and feed back information about the measurement result to the second type of network node according to the information feedback mode by using the interface.

With reference to the third aspect, in a first possible implementation manner, the interface is specifically configured to receive first notification signaling sent by the second type of network node, where the first notification signaling carries indication information of the information feedback mode.

With reference to the third aspect or the first possible implementation manner, in a second possible implementation manner, the processor is specifically configured to: determine the feedback object according to measurement reference signal resource configuration information; and determine that the feedback object is the valid signal if the measurement reference signal resource configuration information includes a channel state information-reference signal CSI-RS; or determine that the feedback object is the noise signal if the measurement reference signal resource configuration information includes channel state information-interference measurement CSI-IM; or determine that the feedback object is the valid signal and the noise signal if the measurement reference signal resource configuration information includes a CSI-RS and CSI-IM.

With reference to the third aspect or the first possible implementation manner, in a third possible implementation manner, the processor is specifically configured to determine the feedback object according to selection indication information that is sent by the second type of network node and received by the interface.

With reference to the third aspect or the first possible implementation manner, in a fourth possible implementation manner, the processor is specifically configured to: determine the feedback object according to the measurement reference signal resource configuration information if multi-layer data transmission is supported; and determine that the feedback object is the valid signal and inter-layer interference if the measurement reference signal resource configuration information includes a CSI-RS; or determine that the feedback object is interference from another node if the measurement reference signal resource configuration information includes CSI-IM; or determine that the feedback object is the valid signal, inter-layer interference, and interference from another node if the measurement reference signal resource configuration information includes a CSI-RS and CSI-IM.

With reference to the third aspect or any one of the first to the fourth possible implementation manners, in a fifth possible implementation manner, the processor is specifically configured to: quantize the measurement result; and feed back information about a quantized measurement result to the second type of network node according to the information feedback mode by using the interface.

With reference to the fifth possible implementation manner, in a sixth possible implementation manner, that the processor is specifically configured to quantize the measurement result is specifically: obtaining a quantized valid signal according to a local first preset adjustment value and the valid signal when the feedback object includes the valid signal; and obtaining a quantized noise signal according to a local second preset adjustment value and the noise signal when the feedback object includes the noise signal.

With reference to the fifth possible implementation manner, in a seventh possible implementation manner, that the processor is specifically configured to quantize the measurement result is specifically: obtaining a quantized valid signal according to a quantized reference level from the second type of network node and the valid signal when the feedback object includes the valid signal; and obtaining a quantized noise signal according to the quantized reference level from the second type of network node and the noise signal when the feedback object includes the noise signal.

In the embodiments of the present invention, if the information feedback mode is the separate feedback mode, the first type of network node measures a determined feedback object after determining the feedback object; then, when feeding back information, the first type of network node uses the separate feedback mode to feed back a measurement result of the valid signal and/or a measurement result of the noise signal, so that the second type of network node may acquire a separate valid signal and/or noise signal, and the second type of network node may perform corresponding processing according to an obtained separate signal, for example, a CQI may be calculated, or other processing may be performed, which is more flexible compared with a feedback manner in the prior art. If the second type of network node needs to re-determine the CQI, the second type of network node only performs recalculation according to the separate signal and does not need to acquire the CQI again from the first type of network node, which reduces information feedback volume, reduces information transmission steps, reduces processing time, and improves system efficiency.

In addition, because a signal is separately fed back, there is no need to configure two pieces of measurement reference signal resource configuration information, and it may be determined, according to a requirement, whether one piece or two pieces need to be configured, which reduces workload of a network node and improves the system efficiency. In addition, there is no need to configure, as in the prior art, multiple groups of CSI-RSs and CSI-IM for acquiring CQIs in different combined conditions of a signal and interference. In the present invention, even only one CSI-RS resource and/or one CSI-IM resource may be configured, so that a quantity of resources that need to be configured greatly reduces, which reduces time expended in configuring resources and effectively improves the system efficiency.

## BRIEF DESCRIPTION OF DRAWINGS

FIG. 1 is a main flowchart of an information feedback method according to an embodiment of the present invention;
FIG. 2 is a structural block diagram of a first type of network node according to an embodiment of the present invention; and
FIG. 3 is a schematic structural diagram of a first type of network node according to an embodiment of the present invention.

## DESCRIPTION OF EMBODIMENTS

An information feedback method in embodiments of the present invention may include: acquiring, by a first type of network node, an information feedback mode from a second type of network node, where the information feedback mode includes: a separate feedback mode and a non-separate feedback mode; determining, by the first type of network node, a feedback object if the information feedback mode is the separate feedback mode, where the feedback object includes a valid signal and/or a noise signal; measuring, by the first type of network node, the feedback object, to acquire a measurement result; and feeding back, by the first type of network node, information about the measurement result to the second type of network node according to the information feedback mode.

In the embodiments of the present invention, if the information feedback mode is the separate feedback mode, the first type of network node measures a determined feedback object after determining the feedback object. Then, when feeding back information, the first type of network node uses the separate feedback mode to feed back a measurement result of the valid signal and/or a measurement result of the noise signal, so that the second type of network node may acquire a separate valid signal and/or noise signal, and the second type of network node may perform corresponding processing according to an obtained separate signal. For example, a CQI may be calculated, or other processing may be performed, which is more flexible compared with a feedback manner in the prior art. If the second type of network node needs to re-determine the CQI, the second type of network node only performs recalculation according to the separate signal and does not need to acquire the CQI again from the first type of network node, which reduces information feedback volume, reduces information transmission steps, reduces processing time, and improves system efficiency.

In addition, because a signal is separately fed back, there is no need to configure two pieces of measurement reference signal resource configuration information, and it may be determined, according to a requirement, whether one piece or two pieces need to be configured, which reduces workload of a network node and improves the system efficiency.

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

Technologies described in this specification may be applied to various communications systems, for example, a Global System for Mobile Communications (Global System for Mobile Communications, GSM), a Code Division Multiple Access (Code Division Multiple Access, CDMA) system, a Time Division Multiple Access (Time Division Multiple Access, TDMA) system, a Wideband Code Division Multiple Access (Wideband Code Division Multiple Access Wireless, WCDMA) system, a Frequency Division Multiple Access (Frequency Division Multiple Addressing, FDMA) system, an Orthogonal Frequency-Division Multiple Access (Orthogonal Frequency-Division Multiple Access, OFDMA) system, a single-carrier FDMA (Single Carrier-FDMA, SC-FDMA) system, a General Packet Radio Service (General Packet Radio Service, GPRS) system, an LTE system, and other wireless communications systems.

In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

In the prior art, to obtain a CQI, a CSI-RS resource and a CSI-IM resource need to be configured. When a quantity of transmission points is relatively large, for example, for a mesh node (Mesh Node, M node) that establishes a connection to a relatively large quantity of neighboring nodes, a quantity of the CSI-RS resource and the CSI-IM resource that need to be configured greatly increases, which causes an increase in feedback volume and reduces the system efficiency.

Specifically, if there are a total of four M nodes in a network, using the prior art, for each node, the CSI-IM resource needs to be configured for a total of eight cases of combinations that indicate whether there is interference in the other three nodes, and a total of 32 times of measurement are required to traverse all cases of the four nodes. A quantity of measurement nonlinearly increases with an increase in a quantity of M nodes, which is unacceptable for a scenario in which the quantity of M nodes is relatively large.

However, in the embodiments of the present invention, there is no need to configure, as in the prior art, multiple groups of CSI-RSs and CSI-IM for acquiring CQIs in different combined conditions of a signal and interference. In the embodiments of the present invention, even only one CSI-RS resource and/or one CSI-IM resource may be configured in some cases, so that a quantity of resources that need to be configured greatly reduces, which reduces time expended in configuring resources and effectively improves the system efficiency.

In the embodiments of the present invention, the first type of network node may refer to the M node, and the second type of network node may be a donor node (Donor node). In the following, the donor node is referred to as a D node for short.

The D node refers to a macro node that has a relatively strong coverage capability, and may implement wireless communication with the M node on at least one carrier, where the D node itself has a connection to a core network.

The M node refers to a node that may implement wireless communication with the D node on at least one carrier and may implement wireless communication with a neighboring M node on at least one carrier.

The following further describes the embodiments of the present invention in detail with reference to accompanying drawings in this specification.

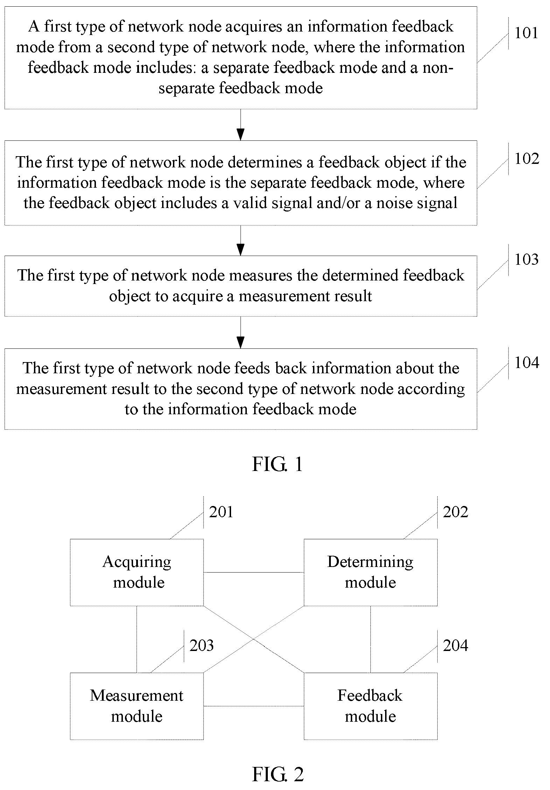

Referring to FIG. 1, an embodiment of the present invention provides an information feedback method, and a main procedure of the method is as follows:

Step 101: A first type of network node acquires an information feedback mode from a second type of network node, where the information feedback mode includes: a separate feedback mode and a non-separate feedback mode.

When the first type of network node feeds back information to the second type of network node, two information feedback modes are available for selection.

One information feedback mode is, for example, the separate feedback mode, where the separate feedback mode refers to feeding back a separate valid signal and/or noise signal, that is, the second type of network node obtains the separate valid signal and/or noise signal, and the second type of network node may perform any required processing according to the obtained valid signal and/or noise signal.

The other information feedback mode is, for example, the non-separate feedback mode, where the non-separate feedback mode refers to feeding back information obtained by means of calculation according to the valid signal and/or the noise signal, for example, feeding back information such as a CQI, that is, the second type of network node obtains a result obtained by means of calculation, and cannot obtain intermediate information.

In this embodiment of the present invention, the noise signal and an interference signal from another node except a source node of a wanted signal are considered as signals with a same characteristic, that is, the noise signal may include noise and interference, and all signals that are not the valid signal are considered as the noise signal, which is not subdivided.

The first type of network node acquires the information feedback mode from the second network node, and feeds back information to the second type of network node by using the acquired information feedback mode.

Optionally, the first type of network node receives first notification signaling sent by the second network node, where the first notification signaling carries indication information of the information feedback mode, where the indication information is used for indicating that the information feedback mode is the separate feedback mode, or is used for indicating that the information feedback mode is the non-separate feedback mode. If the indication information indicates that the information feedback mode is the separate feedback mode, it is equivalent to that the indication information indicates enabling of the separate feedback mode. If the indication information indicates that the information feedback mode is the non-separate feedback mode, it is equivalent to that the indication information indicates disabling of the separate feedback mode.

Optionally, if the indication information carried in the first notification signaling is the indication information for enabling of the separate feedback mode, the first type of network node adjusts the information feedback mode to the separate feedback mode according to the indication information; and if the indication information carried in the first notification signaling is the indication information for disabling of the separate feedback mode, the first type of network node disables the separate feedback mode.

Optionally, a type of the first notification signaling may be specifically higher layer notification signaling. For example, if the indication information is used for indicating that the information feedback mode is the separate feedback mode, a possible specific message format of the first notification signaling is as follows:

```
CQI-ReportConfig
{
******
  CQI-ReportType ENUMERATED {rtDefault,
rtSeperate}
******
}
```

The message format is implemented by adding a new report type field in CQI report configuration information in the prior art, where the CQI report configuration information may specifically refer to CQI-ReportConfig higher layer signaling in the LTE standard specification 36.331. The rtDefault indicates an existing feedback type, that is, the CQI indicates a ratio of the valid signal to the noise signal. The rtSeparate indicates separate feedback of the valid signal and/or the noise signal, that is, indicates the separate feedback mode.

Step 102: The first type of network node determines a feedback object if the information feedback mode is the separate feedback mode, where the feedback object includes a valid signal and/or a noise signal.

Optionally, in this embodiment of the present invention, the determining, by the first type of network node, the feedback object may specifically include: determining, by the first type of network node, the feedback object according to measurement reference signal resource configuration information; and determining that the feedback object is the valid signal if the measurement reference signal resource configuration information includes a channel state information-reference signal CSI-RS; or determining that the feedback object is the noise signal if the measurement reference signal resource configuration information includes channel state information-interference measurement CSI-IM; or determining that the feedback object is the valid signal and the noise signal if the measurement reference signal resource configuration information includes a CSI-RS and CSI-IM.

In this embodiment of the present invention, there may be multiple manners in which the first type of network node determines the feedback object, and only several examples are used in the following for description; however, determining manners of the present invention are not limited to these manners, and all determining manners that comply with the idea of the present invention are within the protection scope of the present invention.

A first case:

The first type of network node already has the measurement reference signal resource configuration information, where the measurement reference signal resource configuration information may include at least the CSI-RS and/or the CSI-IM. Optionally, the measurement reference signal resource configuration information is sent by the second type of network node to the first type of network node. The present invention sets no limitation on an acquiring manner of the measurement reference signal resource configuration information.

In this case, when determining the feedback object, the first type of network node may use the following determining manners:

1. If the measurement reference signal resource configuration information includes only the CSI-RS, the first type of network node may determine that the feedback object is the valid signal; if the measurement reference signal resource configuration information includes only the CSI-IM, the first type of network node may determine that the feedback object is the noise signal; and if the measurement reference signal resource configuration information includes both the CSI-RS and the CSI-IM, the first type of network node may determine that the feedback object has only the valid signal, or the first type of network node may determine that the feedback object has only the noise signal, or the first type of network node may determine that the feedback object includes the valid signal and the noise signal.

That is, the first type of network node may determine the feedback object by itself, and the first type of network node may determine the feedback object according to a situation such as the measurement reference signal resource configuration information. For example, the first type of network node has obtained the valid signal by means of CSI-RS measurement; however, the noise signal has not been measured. The first type of network node may determine that the noise signal is the feedback object, and may measure the noise signal by means of CSI-IM after the determining.

2. The first type of network node may receive selection indication information sent by the second type of network node, where the selection indication information carries an indication that notifies the first type of network node of the feedback object, and the first type of network node determines the feedback object according to the selection indication information.

For example, if the selection indication information indicates that the first type of network node needs to feed back the valid signal, the first type of network node determines that the feedback object is the valid signal; if the selection indication information indicates that the first type of network node needs to feed back the noise signal, the first type of network node determines that the feedback object is the noise signal; and if the selection indication information indicates that the first type of network node needs to feed back the valid signal and the noise signal, the first type of network node determines that the feedback object is the valid signal and the noise signal.

Generally, the second type of network node sends the selection indication information according to the measurement reference signal resource configuration information of the first type of network node; therefore, a problem that because the first type of network node does not have a measurement resource, the first type of network node cannot measure the feedback object specified by the second type of network node generally does not exist.

That is, the second type of network node may determine the feedback object of the first type of network node, and gives an indication to the first type of network node by searching for the selection indication information. The second type of network node may determine the feedback object according to a requirement of the second type of network node, and the feedback object obtained in this manner may comply with the requirement of the second type of network node.

A second case:

The first type of network node does not have the measurement reference signal resource configuration information, and then the first type of network node needs to obtain the measurement reference signal resource configuration information, so as to perform measurement.

In this case, when determining the feedback object, the first type of network node may use the following determining manners:

1. The first type of network node receives the measurement reference signal resource configuration information sent by the second type of network node, and the first type of network node determines the feedback object according to the received measurement reference signal resource configuration information.

Optionally, the first type of network node may receive second notification signaling sent by the second type of network node, where the second notification signaling carries the measurement reference signal resource configuration information, so that the first type of network node determines the feedback object according to the measurement reference signal resource configuration information.

Optionally, in this embodiment of the present invention, the first notification signaling and the second notification signaling may be two different pieces of signaling, or the first notification signaling and the first notification signaling may be the same signaling. For example, if the measurement reference signal resource configuration information includes only the CSI-RS, the first type of network node may determine that the feedback object is the valid signal; if the measurement reference signal resource configuration information includes only the CSI-IM, the first type of network node may determine that the feedback object is the noise signal; and if the measurement reference signal resource configuration information includes both the CSI-RS and the CSI-IM, the first type of network node may determine that the feedback object has only the valid signal, or the first type of network node may determine that the feedback object has only the noise signal, or the first type of network node may determine that the feedback object includes the valid signal and the noise signal. That is, the first type of network node may determine the feedback object by itself.

2. In addition to receiving the measurement reference signal resource configuration information sent by the second type of network node, the first type of network node receives indication information that is sent by the second type of network node and that indicates the feedback object of the first type of network node, and the first type of network node determines the feedback object according to the indication information.

Optionally, the first type of network node may receive second notification signaling sent by the second type of network node, where the second notification signaling carries the measurement reference signal resource configuration information, so that the first type of network node determines the feedback object according to the measurement reference signal resource configuration information.

Optionally, in this embodiment of the present invention, the first notification signaling and the second notification signaling may be two different pieces of signaling, or the first notification signaling and the first notification signaling may be the same signaling.

Optionally, the second type of network node may separately send, by using different signaling, the measurement reference signal resource configuration information and the indication information that indicates the feedback object of the first type of network node, or may simultaneously send, by using the same signaling, the measurement reference signal resource configuration information and the indication information that indicates the feedback object of the first type of network node, which is not limited in the present invention.

Optionally, the second notification signaling may indicate the specific corresponding measurement reference signal resource configuration information in an implicit manner, where the second notification signaling may reuse reference signal indication information in the prior art, for example, one or more of higher layer signaling such as CSI-Process, CSI-ProcessId, CSI-IM-Config, CSI-IM-ConfigId, CSI-RS-Config, CSI-RS-ConfigNZP, CSI-RS-ConfigNZPId, CSI-RS-ConfigZP, and CSI-RS-ConfigZPId that are defined in the LTE standard specification 36.331.

Optionally, the second notification signaling may also indicate, in an explicit manner, an object that should be fed back; in CQI-ReportConfig (CQI-feedback process) of the second notification signaling, an indication Cqi-ReportObject (CQI-feedback object) of a new feedback object is added, for example, in the following format:

```
CQI-ReportConfig
{
******

Cqi-ReportType ENUMERATED {rtDefault, rtSeperate}
******

Cqi-ReportObject ENUMERATED {roSignal, roInterference, roSignalAndInterference}
******
}
```

In this message format, the rtDefault indicates an existing feedback type, that is, the CQI indicates a ratio of the valid signal to the noise signal. The rtSeparate indicates separate feedback of the valid signal and/or the noise signal, that is, indicates the separate feedback mode. The roSignal indicates the valid signal, the roInterference indicates the noise signal, and the roSignalAndInterference indicates the valid signal and the noise signal. If this message format is used, it indicates that the second type of network node simultaneously sends, by using the same signaling (that is, the second notification signaling), the measurement reference signal resource configuration information and the indication information that indicates the feedback object of the first type of network node; in addition, in this case, the second notification signaling and the first notification signaling may be the same signaling.

For example, if it indicates that the first type of network node needs to feed back the valid signal, the first type of network node determines that the feedback object is the valid signal; if it indicates that the first type of network node needs to feed back the noise signal, the first type of network node determines that the feedback object is the noise signal; and if it indicates that the first type of network node needs to feed back the valid signal and the noise signal, the first type of network node determines that the feedback object is the valid signal and the noise signal.

The second type of network node knows the measurement reference signal resource configuration information that the first type of network node has, and a problem that because the first type of network node does not have a measurement resource, the first type of network node cannot measure the feedback object specified by the second type of network node generally does not exist.

If a system supports multi-layer data transmission, the determining, by the first type of network node, the feedback object may include: determining, by the first type of network node, the feedback object according to the measurement reference signal resource configuration information if the multi-layer data transmission is supported; determining that the feedback object is the valid signal and inter-layer interference if the measurement reference signal resource configuration information includes the CSI-RS; or determining that the feedback object is interference from another network node if the measurement reference signal resource configuration information includes the CSI-IM; or determining that the feedback object is the valid signal, inter-layer interference, and interference from another node if the measurement reference signal resource configuration information includes the CSI-RS and the CSI-IM.

The interference from another network node is also within the scope of the noise signal. That is, if the multi-layer data transmission is supported, and if the measurement reference signal resource configuration information includes only the CSI-IM, in this case, the determined noise signal that needs to be fed back is the interference from another network node.

Step 103: The first type of network node measures the determined feedback object to acquire a measurement result.

After determining the feedback object, the first type of network node needs to measure the determined feedback object, so as to acquire the measurement result.

For example, in a case of single-layer data transmission: if determining that the feedback object includes the valid signal, the first type of network node measures the valid signal according to the CSI-RS, so as to acquire a measurement result of the valid signal; and if determining that the feedback object includes the noise signal, the first type of network node measures the valid signal according to the CSI-IM, so as to acquire a measurement result of the noise signal.

Optionally, when the multi-layer data transmission is supported, if determining that the feedback object is the valid signal and the inter-layer interference, the first type of network node measures the valid signal and the inter-layer interference according to the CSI-RS; in addition to feeding back a measurement result that is obtained by means of measurement and that is of the valid signal, the first type of network node may feed back a measurement result that is obtained by means of measurement and that is of the inter-layer interference, or only a measurement result of the valid signal may be fed back.

Step 104: The first type of network node feeds back information about the measurement result to the second type of network node according to the information feedback mode.

Optionally, in a case of single-layer data transmission: the measurement result of the valid signal is fed back if the feedback object is the valid signal; and the measurement result of the noise signal is fed back if the feedback object includes the noise signal.

Optionally, when the multi-layer data transmission is supported, if the determined feedback object is the valid signal and the inter-layer interference, the measurement results of the valid signal and the inter-layer interference are fed back, or only the measurement result of the valid signal may be fed back.

After obtaining the measurement result, the first type of network node feeds back information to the second type of network node according to the information feedback mode.

Preferably, that the first type of network node feeds back information to the second type of network node according to the measurement result may include: quantizing, by the first type of network node, the measurement result; and feeding back, by the first type of network node, information about a quantized measurement result to the second type of network node according to the information feedback mode.

That is, to ensure that the fed back information is more accurate and better meets a direct requirement of the second type of network node, the first type of network node may feed back the quantized measurement result after quantizing the measurement result.

Preferably, in this embodiment of the present invention, there may be different quantizing manners for the first type of network node to quantize the measurement result, and examples are used for the following description:

1. The quantizing, by the first type of network node, the measurement result may include: obtaining, by the first type of network node, a quantized valid signal according to a local first preset adjustment value and the valid signal when the feedback object includes the valid signal; and obtaining, by the first type of network node, a quantized noise signal according to a local second preset adjustment value and the noise signal when the feedback object includes the noise signal.

For example, the first type of network node may quantize the valid signal if the feedback object includes the valid signal, and the first type of network node may quantize the noise signal if the feedback object includes the noise signal.

For example, a manner of quantizing the valid signal may be as follows:

$$SQI = S + \text{offset1} \qquad (1)$$

In the formula (1), SQI is a signal quality indicator, S indicates the valid signal, and offset1 indicates the first preset adjustment value.

For example, a manner of quantizing the noise signal may be as follows:

$$IQI = I + \text{offset2} \qquad (2)$$

In the formula (2), IQI is an interference quality indicator, I indicates the noise signal (I should indicate the interference signal; however, the interference signal and the noise signal are unified as the noise signal in this embodiment of the present invention), and offset2 indicates the second preset adjustment value.

The first type of network node feeds back the SQI and/or the IQI to the second type of network node.

For convenience of description, the SQI, the IQI, the S, the I, the offset1, and the offset2 in the formula (1) and the formula (2) are all dB values. Obviously, a sequence of defining the SQI and the IQI may be reversed, which does not affect implementation of the present invention. The offset1 and the offset2 may be system predefined values, for example, may be empirical values determined by the first type of network node according to past experience, that enable the SQI or the IQI to match an effective range of a quantization table as far as possible.

When information is being fed back, to reuse an existing feedback format in LTE, the SQI and the IQI may be fed back by enabling the SQI and the IQI to occupy a CQI bit defined in an existing feedback format. That is, in the prior art, when the CQI is being fed back, the CQI generally occupies two bit sequences in feedback signaling. Therefore, in this embodiment of the present invention, when the information is being fed back, the information may be fed back according to a format of the feedback signaling in the prior art. For example, if only the SQI needs to be fed back, the SQI may be enabled to occupy either of two bit sequences that are occupied by an original CQI; if only the IQI needs to be fed back, the IQI may also be enabled to occupy either of the two bit sequences that are occupied by the original CQI; and if both the SQI and the IQI need to be fed back, the SQI may be enabled to occupy either of the two bit sequences that are occupied by the original CQI, and the IQI may be enabled to occupy a remaining bit sequence of the two bit sequences that are occupied by the original CQI, or the SQI and the IQI may be separately fed back by using two pieces of signaling. In this way, an original signaling format may be used, there is no need to use a new signaling format, and a feedback manner is relatively simple.

2. The quantizing, by the first type of network node, the measurement result may include: obtaining, by the first type of network node, a quantized valid signal according to a quantized reference level (Quantified Reference Level, QRL) from the second type of network node and the valid signal when the feedback object includes the valid signal; and obtaining, by the first type of network node, a quantized noise signal according to the quantized reference level from the second type of network node and the noise signal when the feedback object includes the noise signal.

That is, in this case, the quantized reference level that is required for quantization is from the second type of network node, so that an obtained quantization result can be closer to a real situation, and enables the obtained result to be more accurate.

For example, a manner of quantizing the valid signal may be as follows:

$$SQI = S - QRL \qquad (3)$$

In the formula (3), SQI is a signal quality indicator, S indicates the valid signal, and QRL indicates the quantized reference level.

In addition, a manner of quantizing the noise signal may be as follows:

$$IQI = QRL - (I+N) \qquad (4)$$

In the formula (4), IQI is an interference quality indicator, QRL indicates the quantized reference level, I indicates the interference, and N indicates the noise. In this embodiment, the noise and the interference are separately indicated. Actually, both the noise and the interference may also be indicated as I or N.

Alternatively, for example, a manner of quantizing the valid signal may be as follows:

$$SQI = QRL - S \qquad (5)$$

In addition, a manner of quantizing the noise signal may be as follows:

$$IQI = (I+N) - QRL \qquad (6)$$

The first type of network node feeds back the SQI and/or the IQI to the second type of network node.
For convenience of description, the SQI, the IQI, the S, the I, the offset1, and the offset2 in the formula (1) and the formula (2) are all dB values. Obviously, a sequence of defining the SQI and the IQI may be reversed, which does not affect implementation of the present invention.
When information is being fed back, to reuse an existing feedback format in LTE, the SQI and the IQI may be fed back by enabling the SQI and the IQI to occupy a CQI bit defined in an existing feedback format. That is, in the prior art, when the CQI is being fed back, the CQI generally occupies two bit sequences in feedback signaling. Therefore, in this embodiment of the present invention, when the information is being fed back, the information may be fed back according to a format of the feedback signaling in the prior art. For example, if only the SQI needs to be fed back, the SQI may be enabled to occupy either of two bit sequences that are occupied by an original CQI; if only the IQI needs to be fed back, the IQI may also be enabled to occupy either of the two bit sequences that are occupied by the original CQI; and if both the SQI and the IQI need to be fed back, the SQI may be enabled to occupy either of the two bit sequences that are occupied by the original CQI, and the IQI may be enabled to occupy a remaining bit sequence of the two bit sequences that are occupied by the original CQI, or the SQI and the IQI may be separately fed back by using two pieces of signaling. In this way, an original signaling format may be used, there is no need to use a new signaling format, and a feedback manner is relatively simple.

Examples used in the foregoing are all transmission of single-layer data. If the multi-layer data transmission is supported, and if the feedback object is the valid signal and the inter-layer interference, the measurement result may include the measurement result of the inter-layer interference in addition to the measurement result of the valid signal. For a specific quantizing manner, continue to refer to the foregoing manners.

According to the foregoing embodiment, a method for implementing separate feedback of a valid signal and a noise signal based on an LTE system is provided, so as to better meet a requirement of performing flexible topology control in a mesh network. In addition, in this embodiment of the present invention, quantization is first performed before feedback, which can improve precision of fed back information as far as possible in a case of a limited feedback overhead.

Referring to FIG. 2, based on a same invention concept, an embodiment of the present invention provides a network node, where the network node may be specifically a first type of network node described above. The network node may include an acquiring unit 201, a determining unit 202, a measurement unit 203, and a feedback unit 204.

The acquiring unit 201 may be configured to acquire an information feedback mode from a second type of network node, where the information feedback mode includes: a separate feedback mode and a non-separate feedback mode.

The determining unit 202 may be configured to determine a feedback object if the information feedback mode acquired by the acquiring unit 201 is the separate feedback mode, where the feedback object includes a valid signal and/or a noise signal.

The measurement unit 203 may be configured to measure the feedback object acquired by the determining unit 202, so as to acquire a measurement result.

The feedback unit 204 may be configured to feed back, according to the information feedback mode acquired by the acquiring unit 201, information about the measurement result acquired by the measurement unit 203 to the second type of network node.

Preferably, in this embodiment of the present invention, the acquiring unit 201 may be specifically configured to receive first notification signaling sent by the second type of network node, where the first notification signaling carries indication information of the information feedback mode.

Preferably, in this embodiment of the present invention, the determining unit 202 may be specifically configured to: determine the feedback object according to measurement reference signal resource configuration information; and determine that the feedback object is the valid signal if the measurement reference signal resource configuration information includes a channel state information-reference signal CSI-RS; or determine that the feedback object is the noise signal if the measurement reference signal resource configuration information includes channel state information-interference measurement CSI-IM; or determine that the feedback object is the valid signal and the noise signal if the measurement reference signal resource configuration information includes a CSI-RS and CSI-IM.

Preferably, in this embodiment of the present invention, the determining unit 202 may be specifically configured to determine the feedback object according to selection indication information that is sent by the second type of network node and received by the acquiring unit 201.

Preferably, in this embodiment of the present invention, the determining unit 202 may be specifically configured to: determine the feedback object according to the measurement reference signal resource configuration information if multi-layer data transmission is supported; and determine that the feedback object is the valid signal and inter-layer interference if the measurement reference signal resource configuration information includes a CSI-RS; or determine that the feedback object is interference from another node if the measurement reference signal resource configuration information includes CSI-IM; or determine that the feedback object is the valid signal, inter-layer interference, and interference from another node if the measurement reference signal resource configuration information includes a CSI-RS and CSI-IM.

Preferably, in this embodiment of the present invention, the feedback unit 204 may be specifically configured to: quantize the measurement result; and feed back information about a quantized measurement result to the second type of network node according to the information feedback mode.

Preferably, in this embodiment of the present invention, the feedback unit 204 may be specifically configured to quantize the measurement result, where a process of quantizing the measurement result may be specifically: obtaining a quantized valid signal according to a local first preset adjustment value and the valid signal when the feedback object includes the valid signal; and obtaining a quantized noise signal according to a local second preset adjustment value and the noise signal when the feedback object includes the noise signal.

Preferably, in this embodiment of the present invention, the feedback unit 204 may be specifically configured to quantize the measurement result, where a process of quantizing the measurement result may be specifically: obtaining a quantized valid signal according to a quantized reference level from the second type of network node and the valid signal when the feedback object includes the valid signal; and obtaining a quantized noise signal according to the quantized reference level from the second type of network node and the noise signal when the feedback object includes the noise signal.

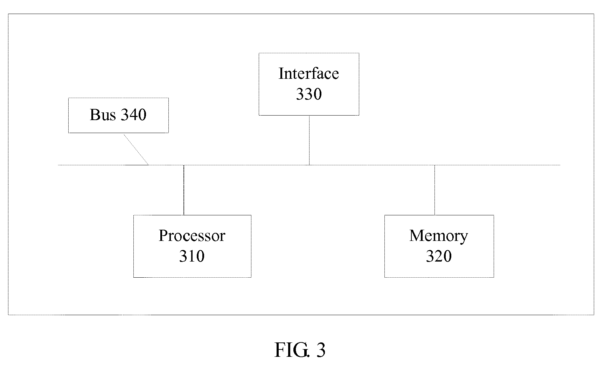

Referring to FIG. 3, based on a same invention concept, an embodiment of the present invention provides a network node, where the network node may be a first type of network node described above. The network node includes: a bus 340, and a processor 310, a memory 320, and an interface 330 that are connected to the bus 340. The memory 320 is configured to store an instruction. The interface 330 is configured to acquire an information feedback mode from a second type of network node, where the information feedback mode includes: a separate feedback mode and a non-separate feedback mode. The processor 310 is configured to: determine a feedback object if the information feedback mode is the separate feedback mode, where the feedback object includes a valid signal and/or a noise signal; measure the feedback object to acquire a measurement result; and feed back information about the measurement result to the second type of network node according to the information feedback mode by using the interface 330.

Preferably, in this embodiment of the present invention, the interface 330 is specifically configured to receive first notification signaling sent by the second type of network node, where the first notification signaling carries indication information of the information feedback mode.

Preferably, in this embodiment of the present invention, the processor 310 is specifically configured to: determine the feedback object according to measurement reference signal resource configuration information; and determine that the feedback object is the valid signal if the measurement reference signal resource configuration information includes a channel state information-reference signal CSI-RS; or determine that the feedback object is the noise signal if the measurement reference signal resource configuration information includes channel state information-interference measurement CSI-IM; or determine that the feedback object is the valid signal and the noise signal if the measurement reference signal resource configuration information includes a CSI-RS and CSI-IM.

Preferably, in this embodiment of the present invention, the processor 310 is specifically configured to determine the feedback object according to selection indication information that is sent by the second type of network node and received by the interface 330.

Preferably, in this embodiment of the present invention, the processor 310 is specifically configured to: determine the feedback object according to the measurement reference signal resource configuration information if multi-layer data transmission is supported; and determine that the feedback object is the valid signal and inter-layer interference if the measurement reference signal resource configuration information includes a CSI-RS; or determine that the feedback object is interference from another node if the measurement reference signal resource configuration information includes CSI-IM; or determine that the feedback object is the valid signal, inter-layer interference, and interference from another node if the measurement reference signal resource configuration information includes a CSI-RS and CSI-IM.

Preferably, in this embodiment of the present invention, the processor 310 is specifically configured to: quantize the measurement result; and feed back information about a quantized measurement result to the second type of network node according to the information feedback mode by using the interface 330.

Preferably, in this embodiment of the present invention, the processor 310 is specifically configured to quantize the measurement result, where a process of quantizing the measurement result may be specifically:

obtaining a quantized valid signal according to a local first preset adjustment value and the valid signal when the feedback object includes the valid signal; and obtaining a quantized noise signal according to a local second preset adjustment value and the noise signal when the feedback object includes the noise signal.

Preferably, in this embodiment of the present invention, the processor 310 is specifically configured to quantize the measurement result, where a process of quantifying the measurement result may be specifically: obtaining a quantized valid signal according to a quantized reference level from the second type of network node and the valid signal when the feedback object includes the valid signal; and obtaining a quantized noise signal according to the quantized reference level from the second type of network node and the noise signal when the feedback object includes the noise signal.

The information feedback method in the embodiments of the present invention may include: acquiring, by a first type of network node, an information feedback mode from a second type of network node, where the information feedback mode includes: a separate feedback mode and a non-separate feedback mode; determining, by the first type of network node, a feedback object if the information feedback mode is the separate feedback mode, where the feedback object includes a valid signal and/or a noise signal; measuring, by the first type of network node, the feedback object, to acquire a measurement result; and feeding back, by the first type of network node, information about the measurement result to the second type of network node according to the information feedback mode.

In the embodiments of the present invention, if the information feedback mode is the separate feedback mode, the first type of network node measures a determined feedback object after determining the feedback object; then, when feeding back information, the first type of network node uses the separate feedback mode to feed back a measurement result of the valid signal and/or a measurement result of the noise signal, so that the second type of network node may acquire a separate valid signal and/or noise signal, and the second type of network node may perform corresponding processing according to an obtained separate signal, for example, a CQI may be calculated, or other processing may be performed, which is more flexible compared with a feedback manner in the prior art. If the second type of network node needs to re-determine the CQI, the second type of network node only performs recalculation according to the separate signal and does not need to acquire the CQI again from the first type of network node, which reduces information feedback volume, reduces information transmission steps, reduces processing time, and improves system efficiency.

In addition, because a signal is separately fed back, there is no need to configure two pieces of measurement reference signal resource configuration information, and it may be determined, according to a requirement, whether one piece or two pieces need to be configured, which reduces workload of a network node and improves the system efficiency.

It may be clearly understood by a person skilled in the art that, for the purpose of convenient and brief description, division of the foregoing function units is taken as an example for illustration. In actual application, the foregoing functions can be allocated to different function units and implemented according to a requirement, that is, an inner structure of an apparatus is divided into different function units to implement all or part of the functions described above. For a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present application essentially, or the part contributing to the prior art, or all or a part of the technical solutions may be implemented in the form of a software product. The software product is stored in a storage medium and includes several instructions for instructing a computer device (which may be a personal computer, a server, or a network device) or a processor to perform all or a part of the steps of the methods described in the embodiments of the present application. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing embodiments are merely used to describe the technical solutions of the present application. The foregoing embodiments are merely intended to help understand the method and core idea of the present invention, and shall not be construed as a limitation on the present invention. Any variation or replacement readily figured out by a person skilled in the art within the technical scope disclosed in the present invention shall fall within the protection scope of the present invention.

**Claims**

1. An information feedback method, comprising:

   acquiring, by a first type of network node, an information feedback mode from a second type of network node, wherein the information feedback mode comprises: a separate feedback mode and a non-separate feedback mode;
   determining, by the first type of network node, a feedback object if the information feedback mode is the separate feedback mode, wherein the feedback object comprises a valid signal and/or a noise signal;
   measuring, by the first type of network node, the feedback object, to acquire a measurement result; and
   feeding back, by the first type of network node, information about the measurement result to the second type of network node according to the information feedback mode.

2. The method according to claim 1, wherein the acquiring, by a first type of network node, an information feedback mode from a second type of network node comprises: receiving, by the first type of network node, first notification signaling sent by the second type of network node, wherein the first notification signaling carries indication information of the information feedback mode.

3. The method according to claim 1 or 2, wherein the determining, by the first type of network node, a feedback object comprises:

   determining, by the first type of network node, the feedback object according to measurement reference signal resource configuration information; and
   determining that the feedback object is the valid signal if the measurement reference signal resource configuration information comprises a channel state information-reference signal CSI-RS; or

determining that the feedback object is the noise signal if the measurement reference signal resource configuration information comprises channel state information-interference measurement CSI-IM; or

determining that the feedback object is the valid signal and the noise signal if the measurement reference signal resource configuration information comprises a CSI-RS and CSI-IM.

4. The method according to claim 1 or 2, wherein the determining, by the first type of network node, a feedback object comprises:

receiving, by the first type of network node, selection indication information sent by the second type of network node; and
determining, by the first type of network node, the feedback object according to the selection indication information.

5. The method according to claim 1 or 2, wherein the determining, by the first type of network node, a feedback object comprises:

determining, by the first type of network node, the feedback object according to the measurement reference signal resource configuration information if multi-layer data transmission is supported; and
determining that the feedback object is the valid signal and inter-layer interference if the measurement reference signal resource configuration information comprises a CSI-RS; or
determining that the feedback object is interference from another node if the measurement reference signal resource configuration information comprises CSI-IM; or
determining that the feedback object is the valid signal, inter-layer interference, and interference from another node if the measurement reference signal resource configuration information comprises a CSI-RS and CSI-IM.

6. The method according to any one of claims 1 to 5, wherein the feeding back, by the first type of network node, information about the measurement result to the second type of network node comprises:

quantizing, by the first type of network node, the measurement result; and
feeding back, by the first type of network node, information about a quantized measurement result to the second type of network node according to the information feedback mode.

7. The method according to claim 6, wherein the quantizing, by the first type of network node, the measurement result comprises:

obtaining, by the first type of network node, a quantized valid signal according to a local first preset adjustment value and the valid signal when the feedback object comprises the valid signal; and
obtaining, by the first type of network node, a quantized noise signal according to a local second preset adjustment value and the noise signal when the feedback object comprises the noise signal.

8. The method according to claim 6, wherein the quantizing, by the first type of network node, the measurement result comprises:

obtaining, by the first type of network node, a quantized valid signal according to a quantized reference level from the second type of network node and the valid signal when the feedback object comprises the valid signal; and
obtaining, by the first type of network node, a quantized noise signal according to the quantized reference level from the second type of network node and the noise signal when the feedback object comprises the noise signal.

9. A network node, comprising:

an acquiring unit, configured to acquire an information feedback mode from a second type of network node, wherein the information feedback mode comprises: a separate feedback mode and a non-separate feedback mode;
a determining unit, configured to determine a feedback object if the information feedback mode acquired by the acquiring unit is the separate feedback mode, wherein the feedback object comprises a valid signal and/or a noise signal;
a measurement unit, configured to measure the feedback object acquired by the determining unit, so as to acquire a measurement result; and
a feedback unit, configured to feed back, according to the information feedback mode acquired by the acquiring unit, information about the measurement result acquired by the measurement unit to the second type of network node.

10. The network node according to claim 9, wherein the acquiring unit is specifically configured to receive first notification signaling sent by the second type of network node, wherein the first notification signaling carries indication information of the information feedback mode.

11. The network node according to claim 9 or 10, wherein the determining unit is specifically configured to: determine the feedback object according to measurement reference signal resource configuration information; and determine that the feedback object is the valid signal if the measurement reference signal resource configuration information comprises a channel state information-reference signal CSI-RS; or determine that the feedback object is the noise signal if the measurement reference signal resource configuration information comprises channel state information-interference measurement CSI-IM; or determine that the feedback object is the valid signal and the noise signal if the measurement reference signal resource configuration information comprises a CSI-RS and CSI-IM.

12. The network node according to claim 9 or 10, wherein the determining unit is specifically configured to determine the feedback object according to selection indication information that is sent by the second type of network node and received by the acquiring unit.

13. The network node according to claim 9 or 10, wherein the determining unit is specifically configured to: determine the feedback object according to the measurement reference signal resource configuration information if multi-layer data transmission is supported; and determine that the feedback object is the valid signal and inter-layer interference if the measurement reference signal resource configuration information comprises a CSI-RS; or determine that the feedback object is interference from another node if the measurement reference signal resource configuration information comprises CSI-IM; or determine that the feedback object is the valid signal, inter-layer interference, and interference from another node if the measurement reference signal resource configuration information comprises a CSI-RS and CSI-IM.

14. The network node according to any one of claims 9 to 13, wherein the feedback unit is specifically configured to: quantize the measurement result; and feed back information about a quantized measurement result to the second type of network node according to the information feedback mode.

15. The network node according to claim 14, wherein that the feedback unit is specifically configured to quantize the measurement result is specifically: obtaining a quantized valid signal according to a local first preset adjustment value and the valid signal when the feedback object comprises the valid signal; and obtaining a quantized noise signal according to a local second preset adjustment value and the noise signal when the feedback object comprises the noise signal.

16. The network node according to claim 14, wherein that the feedback unit is specifically configured to quantize the measurement result is specifically: obtaining a quantized valid signal according to a quantized reference level from the second type of network node and the valid signal when the feedback object comprises the valid signal; and obtaining a quantized noise signal according to the quantized reference level from the second type of network node and the noise signal when the feedback object comprises the noise signal.

17. A network node, comprising:

a memory, configured to store an instruction;
an interface, configured to acquire an information feedback mode from a second type of network node, wherein the information feedback mode comprises: a separate feedback mode and a non-separate feedback mode; and
a processor, configured to: determine a feedback object if the information feedback mode is the separate feedback mode, wherein the feedback object comprises a valid signal and/or a noise signal; measure the feedback object to acquire a measurement result; and feed back information about the measurement result to the second type of network node according to the information feedback mode by using the interface.

18. The network node according to claim 17, wherein the interface is specifically configured to receive first notification signaling sent by the second type of network node, wherein the first notification signaling carries indication information of the information feedback mode.

19. The network node according to claim 17 or 18, wherein the processor is specifically configured to: determine the feedback object according to measurement reference signal resource configuration information; and determine that the feedback object is the valid signal if the measurement reference signal resource configuration information comprises a channel state information-reference signal CSI-RS; or determine that the feedback object is the noise signal if the measurement reference signal resource configuration information comprises channel state information-interference measurement CSI-IM; or determine that the feedback object is the valid signal and the noise signal if the measurement reference signal resource configuration information comprises a CSI-RS and CSI-IM.

**20.** The network node according to claim 17 or 18, wherein the processor is specifically configured to determine the feedback object according to selection indication information that is sent by the second type of network node and received by the interface.

**21.** The network node according to claim 17 or 18, wherein the processor is specifically configured to: determine the feedback object according to the measurement reference signal resource configuration information if multi-layer data transmission is supported; and determine that the feedback object is the valid signal and inter-layer interference if the measurement reference signal resource configuration information comprises a CSI-RS; or determine that the feedback object is interference from another node if the measurement reference signal resource configuration information comprises CSI-IM; or determine that the feedback object is the valid signal, inter-layer interference, and interference from another node if the measurement reference signal resource configuration information comprises a CSI-RS and CSI-IM.

**22.** The network node according to any one of claims 17 to 21, wherein the processor is specifically configured to: quantize the measurement result; and feed back information about a quantized measurement result to the second type of network node according to the information feedback mode by using the interface.

**23.** The network node according to claim 22, wherein that the processor is specifically configured to quantize the measurement result is specifically: obtaining a quantized valid signal according to a local first preset adjustment value and the valid signal when the feedback object comprises the valid signal; and obtaining a quantized noise signal according to a local second preset adjustment value and the noise signal when the feedback object comprises the noise signal.

**24.** The network node according to claim 22, wherein that the processor is specifically configured to quantize the measurement result is specifically: obtaining a quantized valid signal according to a quantized reference level from the second type of network node and the valid signal when the feedback object comprises the valid signal; and obtaining a quantized noise signal according to the quantized reference level from the second type of network node and the noise signal when the feedback object comprises the noise signal.

A first type of network node acquires an information feedback mode from a second type of network node, where the information feedback mode includes: a separate feedback mode and a non-separate feedback mode — 101

The first type of network node determines a feedback object if the information feedback mode is the separate feedback mode, where the feedback object includes a valid signal and/or a noise signal — 102

The first type of network node measures the determined feedback object to acquire a measurement result — 103

The first type of network node feeds back information about the measurement result to the second type of network node according to the information feedback mode — 104

FIG. 1

201

202

Acquiring module

Determining module

203

204

Measurement module

Feedback module

FIG. 2

FIG. 3

# INTERNATIONAL SEARCH REPORT

| International application No. |
|---|
| **PCT/CN2014/070163** |

## A. CLASSIFICATION OF SUBJECT MATTER

H04L 1/00 (2006.01) i; H04L 1/06 (2006.01) i; H04W 72/12 (2009.01) i; H04B 7/06 (2006.01) n

According to International Patent Classification (IPC) or to both national classification and IPC

## B. FIELDS SEARCHED

Minimum documentation searched (classification system followed by classification symbols)

IPC: H04L; H04W; H04B

Documentation searched other than minimum documentation to the extent that such documents are included in the fields searched

Electronic data base consulted during the international search (name of data base and, where practicable, search terms used)

CPRSABS; CNABS; DWPI; VEN: desired signal, noise, signal to noise ratio, signal to interference plus noise ratio, SNR, SNIR, CSI, CQI, feedback, interference, feed, channel state, configuration, measure

## C. DOCUMENTS CONSIDERED TO BE RELEVANT

| Category* | Citation of document, with indication, where appropriate, of the relevant passages | Relevant to claim No. |
|---|---|---|
| Y | CN 103220069 A (HUAWEI TECHNOLOGIES CO., LTD.), 24 July 2013 (24.07.2013), abstract, and description, paragraphs 0029-0050 | 1, 2, 4, 6, 9, 10, 12, 14, 17, 18, 20, 22 |
| Y | CN 101951686 A (XIDIAN UNIVERSITY), 19 January 2011 (19.01.2011), abstract | 1, 2, 4, 6, 9, 10, 12, 14, 17, 18, 20, 22 |
| A | CN 103391124 A (ZTE CORP.), 13 November 2013 (13.11.2013), the whole document | 1-24 |
| A | CN 103368629 A (ZTE CORP.), 23 October 2013 (23.10.2013), the whole document | 1-24 |
| A | CN 103490865 A (CHINA ACADEMY OF TELECOMMUNICATION TECHNOLOGY), 01 January 2014 (01.01.2014), the whole document | 1-24 |
| A | CN 103368697 A (ZTE CORP.), 23 October 2013 (23.10.2013), the whole document | 1-24 |

☐ Further documents are listed in the continuation of Box C.     ☒ See patent family annex.

| | |
|---|---|
| *     Special categories of cited documents:<br><br>"A"   document defining the general state of the art which is not considered to be of particular relevance<br><br>"E"   earlier application or patent but published on or after the international filing date<br><br>"L"   document which may throw doubts on priority claim(s) or which is cited to establish the publication date of another citation or other special reason (as specified)<br><br>"O"   document referring to an oral disclosure, use, exhibition or other means<br><br>"P"   document published prior to the international filing date but later than the priority date claimed | "T"   later document published after the international filing date or priority date and not in conflict with the application but cited to understand the principle or theory underlying the invention<br><br>"X"   document of particular relevance; the claimed invention cannot be considered novel or cannot be considered to involve an inventive step when the document is taken alone<br><br>"Y"   document of particular relevance; the claimed invention cannot be considered to involve an inventive step when the document is combined with one or more other such documents, such combination being obvious to a person skilled in the art<br><br>"&"   document member of the same patent family |
| Date of the actual completion of the international search<br><br>24 September 2014 (24.09.2014) | Date of mailing of the international search report<br><br>**13 October 2014 (13.10.2014)** |
| Name and mailing address of the ISA/CN:<br>State Intellectual Property Office of the P. R. China<br>No. 6, Xitucheng Road, Jimenqiao<br>Haidian District, Beijing 100088, China<br>Facsimile No.: (86-10) 62019451 | Authorized officer<br><br>**WANG, Wei**<br><br>Telephone No.: (86-10) **62411506** |

Form PCT/ISA/210 (second sheet) (July 2009)

## INTERNATIONAL SEARCH REPORT
### Information on patent family members

International application No.

**PCT/CN2014/070163**

| Patent Documents referred in the Report | Publication Date | Patent Family | Publication Date |
|---|---|---|---|
| CN 103220069 A | 24 July 2013 | WO 2013107396 A1 | 25 July 2013 |
| CN 101951686 A | 19 January 2011 | CN 101951686 B | 20 March 2013 |
| CN 103391124 A | 13 November 2013 | None | |
| CN 103368629 A | 23 October 2013 | None | |
| CN 103490865 A | 01 January 2014 | WO 2013185590 A1 | 19 December 2013 |
| CN 103368697 A | 23 October 2013 | None | |

Form PCT/ISA/210 (patent family annex) (July 2009)